# NEW EUROPEAN PATENT SPECIFICATION

(11) **EP 1 484 375 B2**
(45) Date of publication and mention of the opposition decision: **23.07.2014**
(45) Mention of the grant of the patent: 22.12.2010
(21) Application number: 04396037.6
(22) Date of filing: 04.06.2004
(51) Int. Cl.: C09F 1/00, D21C 3/22, D21C 9/08

(54) **Resin acid composition and use thereof**
Harzsäure enthaltende Zusammensetzung und ihre Verwendung
Composition d'acide résinique et son usage

(30) Priority: 05.06.2003 FI 20030846
(43) Date of publication of application: 08.12.2004
(73) Proprietor: Forchem Oy, 26101 Rauma (FI)
(72) Inventor: Saviainen, Juhani, 26660 Rauma (FI); Lähde, Eelis, FIN-37630 Valkeakoski (FI)
(74) Representative: Seppo Laine Oy

(56) References cited:
- WO-A-91/14748
- WO-A-2004/057101
- SE-B- 311 468
- US-A- 1 992 754
- US-A- 3 216 909
- US-A- 4 507 228

## Description

The present invention relates to a resin acid composition.

A composition such as this comprises at least 60 per cent by weight resin acids and 0 - 40 per cent by weight fatty acids. Generally, the resin and fatty acids are saponified, i.e. they occur in the form of their salts. The rest of the product, generally approximately 0 -3 per cent by weight of its dry matter, consists of other constituents, which have been dissolved from the pinewood during the pulping process (for instance unsaponified neutral compounds).

The present invention concerns a method, according to the preamble of claim 1, of removing extractives from cellulose pulp. In this method, the pulp is contacted with the resin acid composition in order to dissolve the extractives from the pulp.

In the pulping industry, wood chips are principally cooked in an alkaline aqueous solution, wherein the fibres and the binding lignin of the wood are separated from each other, and the lignin is dissolved in the alkaline solution. After cooking, the pulp is washed with a countercurrent washing, whereby concentrated lignin and alkaline cooking liquor are separated from the fibre pulp of the wood.

Besides containing lignin and pulps, wood is made up of many other constituents. These constituents are fats and resins, which are separated in the form of fatty acids and resin acids, by means of acidification of the spent liquor of the pulping. The spent liquor remaining after pulping also comprises terpenes, neutral compounds and various alcohols. There are no particular problems associated with the production of softwood pulp. By contrast, in the production of hardwood pulp the neutral extractives remain in the pulp, leading to adverse effects in the production of paper and cardboard.

In their recently published article [Journal of Pulp and Paper Science (2003), 29(1), 29-34], E. Bergelin and B. Holmbom state that in removing the extractives in birchwood pulp, the amount of residual extractives is 0.7 - 2 kg/ton of pulp after the washing and the bleaching stages, and that the most important constituents of the residue are betulinol, lupeol and fatty acids. These products appear to attach firmly to the pulp fibre. Studies by P. Fardim & al., Macromolecular Chemistry (2002) 1-4, 2 August, 2002, demonstrate that the extractives could not be anywhere totally removed from birchwood pulp when using acetone or acetone-acetic acid extraction. By contrast, the removal was nearly complete when phosphate compounds were applied. In addition, an article in the journal Eastern Pharmacist (1970), 13(148), 127-130, states that betulinol-acetate, too, is found in birch. It is evident that during pulping this compound is changed into betulinol.

Betulinol and lupeol are both compounds known as triterpenes, which have four combined six-ring structures and one attached five-ring structure. In betulinol, there is a -CH₂OH group, whereas in lupeol, there is a -CH₃ group.

Being hydrophobic compounds, betulinol and lupeol accumulate on their surfaces sticky compounds, and these compounds have an adverse effect on the paper production, because, by accumulating together, they form greasy spots on the paper, and by forming spots that repel printing ink on the printing bed they affect the quality of the printing on the paper. In addition, larger amounts of extractives cause web breaks on the paper machine. Furthermore, according to some studies, the extractives decrease the brightness of paper (US Patent Specification No. 4,444,621).

Many methods and products have been developed for removing the extractives at different stages of pulp production.

US Patent Specification No. 4,673,460 describes how wood chips are treated both before and during pulping with ethoxylated acrylic phenol compounds and with a sulphonated fatty acid. Generally, the treatment is carried out by applying compounds that have dispersive effects, such as in the solution according to US Patent No. 6,525,169, where the reactive products derived from the interaction of oligo-hydroxy-alkane and epichlorohydrin, as well as certain amines, are used to remove harmful agents by means of emulsification during the paper production process.

According to US Patent No. 5,501,769, resin is removed by introducing esters of polyoxyalkyleneglycol of fatty acids into the pulping.

In US Patent No. 4,444,621, resin compounds are removed and the brightness is improved at alkaline conditions and in the presence of peroxides, and subject to a quite powerful mechanical treatment.

US Patent No. 5,702,644 discloses a solution in which extractives are removed by dispersing them using a cationic guar-compound, which comprises a hydroxy-propyl triammonium group.

In Finland, the traditional way of attempting to remove the extractives during pulping, in particularly from birchwood pulp, has been to add tall oil or resin soap products into the pulp. A typical resin soap is a product that comprises totally not less than approximately 70 % resin acids and approximately 20-25 % fatty acids, which means that according to typical analyses, the abietic acids (approximately 28-29 %) and the dehydroabietic acid (22-23 %) are the main components of the compositions, whereas the other resin acids form 3.5 % and the unsaponified compounds 5-10 % of the organic part of the composition. These percentages are calculated by weight.

Typically, the resin acids have been dosed as 35 % aqueous solutions (soap solutions) to remove the extractives, which means that the amount added has been approximately 15-25 kg soap solution/ton of pulp. Thus, it has been possible to decrease the percentage of the extractives from the level of 1-2 % to the level of 0.15-0.25 %, when measured as acetone extractive.

There are problems associated with the known technique. Thus, a tall oil enriched with conventional crude tall oil and resins removes only limited amounts of the betunol in birchwood. When the percentage of betunol before washing the pulp is, for example, approximately 14 % of all neutral compounds, its percentage after washing is typically approximately 48 %. In addition, typical compositions often comprise polymerized material that is formed when tall oil is distilled in conditions where high local temperatures are present. This polymerized material easily attaches to the wood fibres and, in the form of hydrophobic spots, spoils the quality of paper and reduces the pulp yield.

It is an aim of the present invention is to eliminate the disadvantages associated with the known technique and to provide a novel solution for removing the extractives from hardwood pulp.

Unexpectedly, we have discovered that relatively small changes in the composition of the resin soap lead to a major change in the removal of the extractives; to the extent, in fact, that it has been possible to reduce the use of resin soap while at the same time still reducing the residual extractives in the pulp to less than half, i.e. even down to the level of 0.07-0.08 %.

As disclosed herein the composition of ordinary resin soap has been changed such that the sum total of the amount of abietic acid, dehydroabietic acid and neoabietic acid has been increased to at least 58 per cent by weight of the dry matter of the resin acid composition, i.e. of the total amount of the resin soap. This compares with a figure of slightly more than 50 % in existing products.

This change of approximately 10 % considerably improves the performance of the product, to the extent that the reduction of the extractives is improved by more than half, although the amount of resin soap used has been decreased by 25 %.

More specifically, the method according to the present invention is mainly characterized by what is stated in the characterizing part of claim 1.

Considerable advantages can be achieved with the present invention. Thus, the total percentage of extractives is decreased, the washing problems are reduced and the variations in the percentage of extractives are reduced. In addition, in a mill test, it was unexpectedly discovered that in the process of washing the pulp, after a treatment according to the present invention, its dry matter increases by 2 %.

One of the beneficial properties of the product disclosed herein is that the product contains almost no polymerized material. In other cases polymers are typically generated when tall oil is distilled in conditions where high local temperatures are present. They easily attach to the wood fibres in the form of hydrophobic spots, which spoil the quality of the paper and reduce the pulp yield.

In the following, the present invention will be examined more closely with the help of a detailed description.

The resin acid composition disclosed herein comes from tall oil. More specifically, at issue is a distilled tall oil rosin, TOR, which consists mainly of resin acids, and also comprises fatty acids and neutral compounds. According to the present invention, this product can be produced using a vacuum distillation technique, which means that the desired composition according to a preferable application of the present invention is generated by condensation from the vapour phase of the distillation. We have found that a product produced in this way is essentially free from resin or fatty acid dimers, oligomers and polymers, and isomerized and disproportionated products which typically are a part of the base product of the distillation. By "essentially free" we mean that the amount of these by-products is less than 5 per cent by weight, preferably less than approximately 2 per cent by weight, of the organic part of the composition.

The composition disclosed herein can be produced particularly by using vacuum distillation of tall oil, carried out in a distillation column, one which has a zone of high temperature, where the surface temperature of the heating source is not over 260 °C, and in which zone the retention time of the feed is not over 60 minutes.

The composition of the resin acid obtained comprises at least 60 per cent by weight of its dry matter, preferably at least 70 per cent by weight, resin acids, which are optionally in the form of their salts, and 0-40 per cent by weight, most suitably not over 30 per cent by weight, resin acids or their salts. Among the resin acids typical examples are abietic acid, dehydroabietic acid, neoabietic acid, palustrene acid, pimaric acid and sandrakopimaric acid. Typical fatty acids are the C_{16...24} fatty acids, which are saturated or mainly unsaturated. Linolic acid and oleic acid are typical examples. Besides these main constituents, the resin acid compositions disclosed herein comprise small amounts of other organic constituents, which have been dissolved from the pine wood during pulping.

According to a particularly preferred embodiment the amount of abietic acid in the composition has been increased from a typical 30 per cent by weight to almost 40 % or even above that, which means that the ratio of the abietic acid to the dehydroabietic acid is at least 1.5:1, preferably approximately 1.7...3.0:1, most suitably approximately 1.8...2.6:1, weight/weight.

The sum total of the amounts of abietic acid, dehydroabietic acid, neoabietic acid and palustrene acid is more than 68 per cent by weight of the dry matter of the composition. In this case, at least 58 per cent by weight of the resin acids, preferably approximately 58-75 per cent by weight, in particular at least 60 per cent by weight, then consists of the combined amount of the abietic acid, the dehydroabietic acid and the neoabietic acid.

In order to generate salts of resin acids and fatty acids, the resin acid composition disclosed herein can be saponified, i.e. contacted an aqueous solution of an inorganic alkali. These salts are soluble in water, which means that a water soluble soap derivative can be generated from the hydrophobic mixture of resin acid and fatty acid. From this, it is possible to produce resin soap that is suitable for commercial purposes, one which is delivered, like existing products, in the form of an aqueous solution with a concentration of approximately 30-50 per cent by weight. The saponification reaction of the resin acid composition generally runs its full course which means that the unsaponified part is generally less than 6 per cent by weight, preferably less than 4 per cent by weight, of the total amount of the resin acids.

The product disclosed herein can be used for removing extractives from the pulp. This pulp can be sourced from softwood, such as pine or spruce, but, above all, the present invention is applied to pulps that are produced from hardwood, such as birch, aspen, alder, maple, eucalyptus and mixed tropical hardwood. The present invention can also be applied to pulps made from annual plants, such as the dried stalks of grain, reed canary grass, reed, bagasse etc.

Generally, the pulp is produced using a chemical cooking process, such as the sulphate, the sulphite, the organosolv or the MILOX processes, or by using semi-chemical pulping processes. The cooking chemicals used are primarily sodium sulphide, sodium hydroxide, soda, peroxoformic acid, peroxoacetic acid or alcohol. More preferably the invention is applied to pulps that are produced using the sulphate process and other alkaline methods, and processes carried out with organic cooking chemicals.

According to a more preferable form of the application, the present invention is used on sulphate pulp produced from birch, aspen or eucalyptus.

The pulp is contacted with a resin acid composition before the cooking, in which case a resin acid composition amounting to 0.1-2 per cent by weight of the dry wood amount is added into the cooking liquor of pulp, particularly hardwood pulp, in order to separate the extractives from the pulp. According to this alternative, the resin acids can be in acidic form in the composition which is to be added, because the resin acids are saponified in alkaline pulping conditions and change rapidly to become soluble in water. According to the second alternative, resin acid composition amounting to 0.5-0.05 per cent by weight of the dry matter weight of the pulp, is added in order to wash the pulp (particularly hardwood pulp). Because the washing conditions are fundamentally neutral, the resin acid composition is best added in a water soluble form, i.e. in a saponified form.

The present invention is used to reduce extractives in pulp generated from hardwood cooking, pulp which is at least partly bleached by using oxidative bleaching sequences. Because the extractives react with these kinds of bleaching chemicals, the present invention can be used to intensify the bleaching and to reduce the consumption of chemicals. As a result, the total percentage of extractives is lowered, the changes in the percentage of extractive are reduced and the problems associated with washing are lessened.

Evidently, the extractives of hardwood, which are the most difficult to remove, and which remain in the pulp after cooking, are to a great extent sourced from the bark of birch, in which case these extractives are betuline, betulinol, lupeol and β-sitosterol, and certain fatty acids and betulaprenols. These compounds are difficult to remove from the pulp. Especially difficult is betulinol, which, together with its alcohol group, can form hydrogen bridges with the wood cellulose and which crystallizes on the surface of the cellulose fibre. It is assumed that the present invention particularly decreases the quantity of betulinol in the pulp.

One feature which is characteristic of the product used in present invention is the increased percentage of the abietic acid, as mentioned above. As a result, the ratio of the abietic acid to the dehydroabietic acid is considerably higher than in tall oil products used for conventional purposes. It is not completely clear why this may help to remove the extractives, but, without committing ourselves to any explanatory model, a preliminary observation suggests that the rise in the quantity of abietic acid plays a significant part in the emulsifying effect of the resin acid product. If we presume that, besides the emulsifying effect, the physical adduction of ring compounds to other ring compounds has a significant effect, the increasing of the amount of abietic acid is still emphasized. The quantity of the neoabietic acid and the dehydroabietic acid is significant, too.

It seems that the abietic acid helps to remove the crystallized betulinol from the surface of the fibres. It is also possible that the resin acid distribution disclosed herein helps to form micelles and thus furthers the removal of the extractives at the washing stage.

Our results are surprising. According to the literature (E.L. Back & al, Pitch Control, Wood Resin and Deresination, TAPPI Press, Atlanta, USA 2000, page 211, figure 4), abietic acid alone is not very suitable for removing extractives and, according to the same source, a tall oil, where the ratio of the fatty oils to the resin oils is 7:3 is most suitable (page 211).

However, our own research and own mill tests demonstrate quite the opposite.

This can be explained by the fact that in products with a high resin percentage, a change of resin acids to aromatic hydrocarbons, and accompanying dimerization, along with other polymerization have occurred. Generally these appear at the distillation stage. These thermally generated products, at high temperatures and with long enough retention times, do not disperse the extractives. Instead these products are adsorbed onto the fibres. Another explanation for what we found is that there have been new developments in the bleaching stages of the pulp production, which affects which components are removed and at which stage. Using a mixture of fatty acid-resin a percentage of 0.4 % was achieved instead of the former level of 1-2 %, and with the aid of new bleaching methods, a level of 0.15-0.25 has even been obtained. According to the present invention, a level of 0.07-0.08 % is now achieved when a resin composition disclosed herein is used. Also, 25-30 % less product, according to this resin composition, is needed compared with the amount of previous products used for removing extractives.

The fatty acids in the resin acid soap products have naturally been changed because the distillation technique has been changed. This might be important for the substantially improved removal of the extractives, too. In any case, the cyclic compounded resin acid has contributed to the removal of cyclic compounded neutral extractives.

It is known from literature that in the removal of birch extractives, a 3 % tall oil consisting of approximately 55 % fatty acids and approximately 30 % resin acids and 15 % neutral constituents has the same effect as a 0.5 % sulphonated dodekyl benzene. Furthermore, it is known that by using a tall oil fraction, which, according to our invention, is significantly enriched with resin acids, the dose can be reduced to 0.6 %, where the resin acid percentage would be 0.45 %, correspondingly.

Sulphonated surface-active agents are not suitable because of their price and because, when using them, the "tall oil" is not properly separated from the pulping liquor after the acidification stage.

The following non-limiting example illustrates the present invention:

### Example

Two resin soap compositions, the first of which was a product according to a conventional technique, and the second a resin soap product used according to the present invention, were fed into the cooking liquor of a birch pulping. Both were dosed as 37 % resin soap solutions, 20 kg per ton of cellulose pulp to be produced.

Tables 1 and 2 show the composition of the products:

**Table 1. The acid composition of a resin soap product produced with a conventional technique**

| Resin acid | percentage |
|---|---|
| palustric acid | 8 |
| dehydroabietic acid | 23 |
| abietic acid | 28 |
| neoabietic acid | <2 |
| other resin acids | approx. 20 |
| Resin acids in total | approx. 80 |
| Fatty acids in total | approx. 20 |

**Table 2. The acid composition of a resin acid product used according to the present invention**

| Resin acid | percentage |
|---|---|
| palustric acid | 10 |
| dehydroabietic acid | 19 |
| abietic acid | 40 |
| neoabietic acid | 3 |
| other resin acids | 12 |
| Resin acids in total | 84 |
| Fatty acids in total | 16 |

Using the product according to the present invention, the percentage of the extractive could be reduced to 0.08 %, when measured as acetone extractive, while, using the commercial composition, the percentage of the extractive was 0.15 %. Independently, it has been discovered that the dry matter percentage of the pulp processed according to the present invention was 2 percentage units higher in the pulp washing subsequent to the cooking.

## Claims

1. A method of removing extractives from cellulose pulp, according to which method the pulp is contacted with a resin acid composition, the dry matter content of which comprises
- at least 60 per cent by weight resin acids, which are optionally in the form of their salts, and
- 0 to 40 per cent by weight fatty acids or their salts and unsaponified neutral compounds,
**characterized by**
- using a composition, wherein at least 58 per cent by weight of the resin acids consists of abietic acid, dehydroabietic acid or neoabietic acid or a mixture of them, calculated from the total amount of the resin acid composition, and which is substantially free from dimers, oligomers and polymers, and isomerization or disproportionated products of resin acids or fatty acids, said compositioncomprising a distillation fraction of tall oil, which has been recovered by condensation from the vapour phase of the distillation, and
- adding the composition into a hardwood pulping liquor before cooking in an amount of 0.1 - 2 per cent by weight of the amount of dry wood is added into the hardwood pulping liquor before cooking, or adding the composition to the washing of hardwood pulp in an amount of 0.5 - 0.05 per cent by weight of the dry weight of the pulp, in order to separate the extractives from the pulp.

2. A method according to claim 1, **characterized in that** a composition is used
- where at least 70 per cent by weight of the dry matter consists of resin acids or their salts, and
- where the ratio of the abietic acid to the dehydroabietic acid is at least 1.5:1.

3. A method according to claim 1, **characterized in that** the resin acid composition is added into the alkaline pulping liquor in essentially unsaponified form.

4. A method according to claim 1, **characterized in that** the resin acid composition is added to the washing of the pulp, in essentially saponified form.

5. A method according to any of the claims 1 - 4, **characterized by** reducing the amount of the extractives in pulp which is generated from pulping of hardwood, and which at least partly is bleached by oxidative bleaching sequences.

6. A method according to claim 1, **characterized in that** the composition is obtainable by vacuum distillation of tall oil, where the distillation is carried out in a column having a zone of high temperature, where the surface temperature of the heating source is not over 260 °C, and in which zone the retention time of the feed is not over 60 minutes.

7. A method according to any of the preceding claims, **characterized in that** at least 70 per cent by weight of the dry matter of the composition consists of resin acids or their salts.

8. A method according to any of the preceding claims, **characterized in that**, in the composition, the ratio of the abietic acid to the dehydroabietic acid is at least 1.5:1, preferably approximately 1.7...3.0:1, in particular approximately 1.8...2.6:1, weight/weight.

9. A method according to any of the preceding claims, **characterized in that** the total amount of abietic acid, dehydroabietic acid, neoabietic acid and palustric acid, which it comprises, is more than 68 per cent by weight of the dry matter of the composition, and the rest consists of fatty acids and other constituents dissolved from pinewood.

## Patentansprüche

1. Ein Verfahren zur Entfernung von Extraktstoffen aus einer Cellulosepulpe, bei dem die Pulpe mit einer Harzsäurezusammensetzung in Kontakt gebracht wird, deren Gehalt an Trockenmasse
- mindestens 60 Gew.-% Harzsäuren, die gegebenenfalls in Form ihrer Salze vorliegen, und
- 0 bis 40 Gew.-% Fettsäuren oder deren Salze und unverseifte neutrale Verbindungen
umfasst, **gekennzeichnet durch**
- Verwendung einer Zusammensetzung, in der mindestens 58 Gew.-% der Harzsäuren aus Abietinsäure, Dehydroabietinsäure oder Neoabietinsäure oder aus einer Mischung daraus bestehen, berechnet auf der Grundlage der Gesamtmenge der Harzsäurezusammensetzung, und die im Wesentlichen frei von Dimeren, Oligomeren und Polymeren, sowie Isomerisierungs- oder disproportionierten Produkten von Harzsäuren oder Fettsäuren ist, wobei die Zusammensetzung eine Destillationsfraktion von Tallöl umfasst, die **durch** Kondensation aus der Dampfphase der Destillation gewonnen wurde, und
- Hinzufügen der Zusammensetzung zu einer Hartholzpulpenflüssigkeit vor dem Kochen in einer Menge von 0,1 bis 2 Gew.-% der Menge an trockenem Holz, oder Hinzufügen der Zusammensetzung beim Waschen von Hartholzpulpe in einer Menge von 0,5 bis 0,05 Gew.-% des Trockengewichts der Pulpe, um die Extraktstoffe von der Pulpe zu trennen.

2. Ein Verfahren gemäß Anspruch 1, **dadurch gekennzeichnet, dass** eine Zusammensetzung verwendet wird
- bei der mindestens 70 Gew.-% der Trockenmasse aus Harzsäuren oder deren Salzen bestehen und
- bei der das Verhältnis von Abietinsäure zu Dehydroabietinsäure mindestens 1,5:1 beträgt.

3. Ein Verfahren gemäß Anspruch 1, **dadurch gekennzeichnet, dass** die Harzsäurezusammensetzung in im Wesentlichen unverseifter Form zur alkalischen Pulpenflüssigkeit hinzugegeben wird.

4. Ein Verfahren gemäß Anspruch 1, **dadurch gekennzeichnet, dass** die Harzsäurezusammensetzung in im Wesentlichen verseifter Form beim Waschen der Pulpe hinzugegeben wird.

5. Ein Verfahren gemäß einem der Ansprüche 1 - 4, **gekennzeichnet durch** die Verringerung der Menge an Extraktstoffen in der Pulpe, die **durch** Zerkleinern von Hartholz erzeugt wird und die zumindest teilweise **durch** oxidative Bleichsequenzen gebleicht wird.

6. Ein Verfahren gemäß Anspruch 1, **dadurch gekennzeichnet, dass** die Zusammensetzung durch Vakuumdestillation von Tallöl erhältlich ist, bei der die Destillation in einer Säule mit einer Zone hoher Temperatur durchgeführt wird, in der die Oberflächentemperatur der Heizquelle nicht über 260°C liegt und in der die Verweilzeit der Beschickung nicht über 60 Minuten liegt.

7. Ein Verfahren gemäß einem der vorangehenden Ansprüche, **dadurch gekennzeichnet, dass** mindestens 70 Gew.-% der Trockenmasse der Zusammensetzung aus Harzsäuren oder deren Salzen bestehen.

8. Ein Verfahren gemäß einem der vorangehenden Ansprüche, **dadurch gekennzeichnet, dass** das Verhältnis Gewicht/Gewicht von Abietinsäure zu Dehydroabietinsäure in der Zusammensetzung mindestens 1,5:1, vorzugsweise etwa 1,7...3,0:1, insbesondere etwa 1,8...2,6:1 beträgt.

9. Ein Verfahren gemäß einem der vorangehenden Ansprüche, **dadurch gekennzeichnet, dass** die Gesamtmenge an Abietinsäure, Dehydroabietinsäure, Neoabietinsäure und Palustrinsäure, die sie umfasst, über 68 Gew.-% der Trockenmasse der Zusammensetzung ausmacht und der Rest aus aus Kiefernholz gelösten Fettsäuren und anderen Bestandteilen besteht.

## Revendications

1. Procédé de séparation d'extractifs de pâte de cellulose, procédé selon lequel la pâte est mise en contact avec une composition d'acide résinique, dont la teneur en matières sèches comprend
- au moins 60 pour cent en poids d'acides résiniques, qui sont éventuellement sous forme de leurs sels, et
- 0 à 40 pour cent en poids d'acides gras ou de leurs sels et de composés neutres non saponifiés,
**caractérisé par**
- l'utilisation d'une composition, dans laquelle au moins 58 pour cent en poids des acides résiniques sont constitués d'acide abiétique, d'acide déshydroabiétique ou d'acide néoabiétique ou d'un mélange de ceux-ci, calculée à partir de la quantité totale de la composition d'acide résinique et qui est sensiblement dépourvue de dimères, d'oligomères et de polymères, et de produits d'isomérisation ou disproportionnés d'acides résiniques ou d'acides gras, ladite composition comprenant une fraction de distillation de tallöl, qui a été récupérée par condensation de la phase vapeur de distillation, et
- l'ajout de la composition à une liqueur de réduction en pâte de bois dur avant la cuisson en une quantité de 0,1 à 2 pour cent en poids de la quantité de bois dur qui est ajoutée à la liqueur de réduction en pâte de bois dur avant la cuisson, ou l'ajout de la composition au lavage de la pâte de bois dur en une quantité de 0,5 à 0,05 pour cent en poids du poids des matières sèches de la pâte, afin de séparer les extractifs de la pâte.

2. Procédé selon la revendication 1, **caractérisé en ce qu'**une composition est utilisée
- dans laquelle au moins 70 pour cent en poids des matières sèches sont constitués d'acides résiniques ou de leurs sels, et
- dans laquelle le rapport de l'acide abiétique à l'acide déshydroabiétique est d'au moins 1,5:1.

3. Procédé selon la revendication 1, **caractérisé en ce que** la composition d'acide résinique est ajoutée à la liqueur de réduction en pâte alcaline sous une forme essentiellement non saponifiée.

4. Procédé selon la revendication 1, **caractérisé en ce que** la composition d'acide résinique est ajoutée au lavage de pâte sous une forme essentiellement saponifiée.

5. Procédé selon l'une quelconque des revendications 1 à 4, **caractérisé par** la réduction de la quantité des extractifs dans la pâte qui est générée par réduction en pâte du bois dur et qui est au moins partiellement blanchie par des séquences de blanchiment oxydantes.

6. Procédé selon la revendication 1, **caractérisé en ce que** la composition est susceptible d'être obtenue par distillation sous vide de tallöl, où la distillation est réalisée dans une colonne ayant une zone de température élevée, où la température superficielle de la source de chaleur n'est pas supérieure à 260 °C et zone dans laquelle le temps de séjour de l'alimentation n'est pas supérieur à 60 minutes.

7. Procédé selon l'une quelconque des revendications précédentes, **caractérisé en ce qu'**au moins 70 pour cent en poids des matières sèches de la composition sont constitués d'acides résiniques ou de leurs sels.

8. Procédé selon l'une quelconque des revendications précédentes, **caractérisé en ce que**, dans la composition, le rapport de l'acide abiétique à l'acide déshydroabiétique est d'au moins 1,5:1, de préférence d'environ 1,7 à 3,0:1, en particulier d'environ 1,8 à 2,6:1, en poids.

9. Procédé selon l'une quelconque des revendications précédentes, **caractérisé en ce que** la quantité totale d'acide abiétique, d'acide déshydroabiétique, d'acide néoabiétique et d'acide palustrique, qu'elle comprend, est supérieure à 68 pour cent en poids des matières sèches de la composition et le reste est constitué d'acides gras et d'autres constituants dissous à partir de bois de pin.
